# EUROPEAN PATENT APPLICATION

(11) **EP 2 014 161 A2**
(43) Date of publication of application: **14.01.2009**
(21) Application number: 08445024.6
(22) Date of filing: 01.07.2008
(51) Int. Cl.: A01M 25/00

(54) **Apparatus and method for fighting slugs**

(30) Priority: 09.07.2007 SE 0701648
(71) Applicant: Staffas, Berit, 435 30 Mölnlycke (SE); Staffas, Lars-Erik, 435 30 Mölnlycke (SE)
(72) Inventor: Staffas, Berit, 435 30 Mölnlycke (SE); Staffas, Lars-Erik, 435 30 Mölnlycke (SE)

(57) **Abstract**

An apparatus (1) for fighting slugs, comprising a container (2) for slug poison, having a bottom (3), at least one side (4), and at least one entrance opening (5) for said slugs, wherein the entrance opening (5) is provided in said side (4) and is designed for functioning also as an exit opening for slugs having eaten of said slug poison but for preventing access by larger animals, and wherein the container furthermore has a removable lid (6).

## Description

### TECHNICAL FIELD

The present invention relates to an apparatus for fighting slugs, preferably the Spanish slug, in gardens and other places where the slugs may cause damage. The invention also relates to a method for fighting slugs by means of such an apparatus.

### BACKGROUND OF THE INVENTION

During the last twenty years, the Spanish slug, also called killer slug, has become a nuisance in Sweden and other countries. Today, the slugs survive the relatively mild winters in most parts of Sweden, and the slug population grows substantially during the period spring/summer/autumn. Each slug lays approx. 400 eggs per season. The slugs sustain themselves on most of the commonly occurring plants in gardens and other plantations and can in a short time destroy a common garden.

A number of various solutions have been suggested in order to be able to fight the killer slugs, or at least minimize the damages caused by them.

A previously suggested solution called "Snigelbroms" (slug brake) is an electric fence provided with an electric power supply in the form of a transformer. The electric fence is 10 centimeters high and 20, alternatively 50 meters long. The slugs die when they come in contact with the electric fence.

Another previously suggested solution, called "Stoppar sniglar"(stops slugs), consists of a 1 meter high and 8 meter long net being impregnated with sodium chloride, which is said to have a repellent effect against slugs. It is stated that the net can irritate the skin, and the user is advised to use gloves when handling the net. According to the directions for use, the impregnation might be leached out by rain. The net has to be carefully anchored to the ground and placed at least 15 centimeters from plants which are to be protected. It is stated that grass can yellow by contact, and the net should not come in contact with metal.

A further previously suggested solution, called "Slug trap", consists of a plastic container which to be dug into the ground. According to the manufacturer, a patented bait for slugs is placed in the center of the container and is surrounded by beer into which the slugs fall down and drown. The trap has to be checked every day and emptied of dead slugs. According to the manufacturer, the product is no longer available on the open market, but can only be bought through calling a special phone number.

Still another solution, which has been suggested previously and is commercially available, is various types of slug poisons, e.g. the slug poison which is marketed in Sweden under the names "Snigeleffekt" and "Snigelfritt", respectively, and which are sold in packages of a 1/2 or 1 kg. According to the instructions for use, the poison should be distributed evenly on the ground between the plants which are to be protected when the attacks begin. The slugs eat of the poison and then crawl away to die. The poison pellets should be distributed in the evening and refilling should be done if the pellets are found to be consumed the next day. It is stated that the preparation only attracts slugs. In practical use, it has been found that e.g. magpies and other larger birds also like the preparation, but seem to take no harm from it.

Some other methods used today are:
- sprinkling salt on the slugs, which is neither kind to animals nor the environment;
- collecting the slugs and freezing them for further disposal in compost, which is not very practical;
- cutting the slugs, which implies a very messy operation.

None of these methods are directed towards small, newly hatched slugs.

Several different slug traps have also been previously disclosed, but with a function which is relatively complicated.

None of the previously disclosed solutions provide a simple, efficient, and inexpensive solution to the slug problems described in the foregoing.

Accordingly, there is a need for an improved method for fighting harmful slugs, such as Spanish slugs.

### SUMMARY OF THE INVENTION

Accordingly, a first object of the invention is to provide an apparatus which allows a more efficient, safer, and more economical use of the slug poisons available on the market, and a substantial reduction of the number of slugs in gardens without requiring any handling of dead slugs by the user.

This first object is achieved by means of an apparatus according to patent claim 1, which comprises a container for slug poison having a bottom, at least one side and at least one entrance opening for said slugs, wherein the entrance opening is provided in said side and is designed for functioning also as an exit opening for slugs having eaten of said slug poison but for preventing access by larger animals, and wherein the container furthermore has a removable lid.

A second object of the present invention is to offer garden owners a method for fighting slugs which is inexpensive, simple, and kind to the environment.

This second object is achieved by means of a method according to claim 10, which is effected by means of a container for slug poison, having a bottom, at least one side, and at least one entrance opening for said slugs, wherein the container is placed standing on the ground where slugs are expected to appear, a lid of the container is removed, slug poison is applied inside the container, the lid is put back in place again, and wherein a heavy object is placed on top of the lid.

### BRIEF DESCRIPTION OF THE DRAWINGS

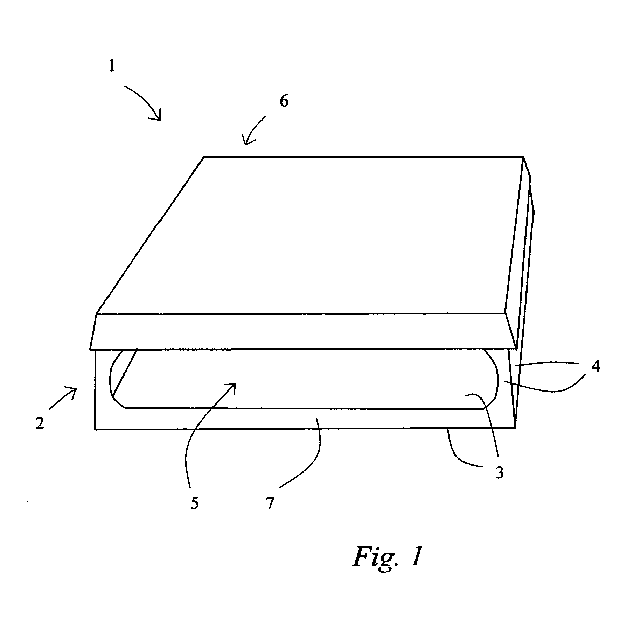

In the following, a number of embodiments of the invention will be described more closely with reference to the attached Figure 1, which is a schematic illustration of an apparatus for fighting slugs according to a preferred embodiment of the invention.

### DESCRIPTION OF EMBODIMENTS OF THE INVENTION

Figure 1 schematically shows an apparatus for fighting slugs according to a preferred embodiment of the invention.

The apparatus 1 consists of a container 2 for slug poison, having a bottom 3, at least one side 4, and at least one entrance opening 5 for said slugs. Furthermore, the container 2 has a removable lid 6. The container in the preferred embodiment is made of strong, green PET plastic, which blends well with nature and which, furthermore, is kind to the environment. A suitable size of the container has proved to be 10 x 10 cm sides and a height of about 3 cm. However, also other sizes are conceivable for the container, for example larger sizes for larger garden composts. The container is provided with an entrance opening for the slugs in at least one side and can, when required, be provided with additional entrance openings. The entrance opening 5 is designed for functioning also as an exit opening for slugs having eaten of the slug poison. In the preferred embodiment, the opening is extending longitudinally in the lower part of the side, and is approx. 15 mm high and is delimited at the bottom by a 5 mm high rim 7, extending from the bottom 3 of the container. The rim 7 prevents water and soil from penetrating into the container and ensures that the slug poison does not fall out. However, the rim 7 allows the slug poison to retain a certain moisture content, which is considered favorable. The design of the entrance opening 5 prevents access by larger animals, such as magpies.

The container 2 is "baited" with conventional slug poison which is available from most garden stores. The slugs eat to a feeling of satisfaction and leave the "dining-table", through the combined entrance and exit opening 5, in order to move away and starve to death. This gives the advantage that the container does not have to be emptied of dead slugs.

Another big advantage provided by the present invention is that the slug poison is utilized to 100 %. No slug poison is spread on the ground where magpies and other animals could eat it, and no poison disappears into the soil or is dissolved by rain. In this way, the user of the apparatus according to the invention can reduce the number of slugs at a reasonable cost and with the minimal effort of refilling the container with slug poison. If the user intends to go away for a longer period of time, he or she can load a larger quantity, since the slugs only eat until they are satisfied.

When using the apparatus according to the present invention, it is important that the fighting is started early in the spring time when the first slugs hatch. Even if these slugs are so small that they can be difficult to discover, they will still find their way to the slug poison in the containers. In this way, these slugs will never have an opportunity to lay eggs of their own.

When used, one or several apparatuses according to the invention are placed on the ground so that the entrance opening is kept free, preferably in the vicinity of such plants which are especially prone to attack by the slugs. A garden owner usually knows from where the slugs normally invade the garden and can position a number of apparatuses according to the invention in order to obstruct the slug attack in the best possible way.

In many gardens, there is a little garden compost which often becomes a nursery for the slugs. Such a compost pile should be turned over a couple of times per year in order to speed up the decay and retard the production of slugs. A few strategically placed apparatuses according to the invention will reduce the slug population even further.

If slugs have managed to come into a kitchen compost container, an apparatus according to the invention can be placed on top of the contents in order to solve this problem.

Magpies are strong and smart birds, and they often try to reach the slug poison. In order to prevent magpies and other animals from moving the apparatus according to the invention, it is important to place a rock or other heavy object on top of the lid. In the preferred embodiment of the invention, this is facilitated by the fact that the bottom 3 of the container is designed for stable abutment against the ground, and that the lid 6 has a flat top side.

The method for fighting slugs according to the invention is performed by means of a container 2 for slug poison having a bottom 3, at least one side 4, and at least one entrance opening 5 for said slugs. In the method according to the invention, a container is placed standing on the ground where slugs are expected to appear, a lid 6 of the container is removed, slug poison is applied inside the container 2, the lid 6 is put back in place again, and a heavy object is placed on top of the lid 6.

In the foregoing, a number of embodiments of the invention have been described in detail. It is to be understood that the described embodiments and details in the attached figure only should be regarded as examples, and that many other embodiments of the invention are possible within the scope of the following claims.

## Claims

1. Apparatus (1) for fighting slugs, comprising a container (2) for slug poison, having a bottom (3), at least one side (4), and at least one entrance opening (5) for said slugs, **characterized in that** the entrance opening (5) is provided in said side (4) and is designed for functioning also as an exit opening for slugs having eaten of said slug poison but also for preventing access by larger animals, and that the container furthermore has a removable lid (6).

2. Apparatus according to claim 1, **characterized in that** the entrance opening is extending longitudinally in the lower part of the side of the container.

3. Apparatus according to claim 1, **characterized in that** the entrance opening is about 15 mm high.

4. Apparatus according to claim 1, **characterized in that** the entrance opening (5) is delimited at the bottom by a rim (7), extending upwards from the bottom of the container (3).

5. Apparatus according to claim 1, **characterized in that** the entrance opening is delimited at the bottom by a rim, about 5 mm high, extending upwards from the bottom of the container.

6. Apparatus according to claim 1, **characterized in that** the container is provided with at least one additional entrance opening.

7. Apparatus according to claim 1, **characterized in that** the container (2) and/or the lid (6) is/are made of a strong grade of plastic, preferably of a green color.

8. Apparatus according to claim 1, **characterized in that** the container and/or lid is/are made of PET plastic.

9. Apparatus according to claim 1, **characterized in that** the bottom (3) of the container is designed for stable abutment against the ground, and that the lid (6) has a flat top surface.

10. Method for fighting slugs with the aid of a container (2) for slug poison, having a bottom (3), at least one side (4), and at least one entrance opening (5) for said slugs, **characterized in that** the container (2) is placed standing on the ground where slugs are expected to appear, that a lid (6) of the container is removed, that slug poison is applied inside the container (2), that the lid (6) is put back in place again, and that a heavy object is placed on top of the lid (6).
